# EUROPÄISCHE PATENTSCHRIFT

(11) **EP 0 798 991 B1**
(45) Veröffentlichungstag und Bekanntmachung des Hinweises auf die Patenterteilung: **29.07.1998**
(21) Anmeldenummer: 95940930.1
(22) Anmeldetag: 22.12.1995
(51) Int. Cl.: A61C 7/00, A61C 8/00

(54) **BEFESTIGUNGSANORDNUNG ZUR FIXIERUNG KIEFERORTHOPÄDISCHER APPARATUREN AN EINEM DENTALIMPLANTAT**
FASTENING SYSTEM FOR MOUNTING AN ORTHODONTIC DEVICE ON A DENTAL IMPLANT
DISPOSITIF DE FIXATION POUR APPAREILLAGES ORTHODONTIQUES SUR UN IMPLANT DENTAIRE

(30) Priorität: 23.12.1994 CH 3921/94
(43) Veröffentlichungstag der Anmeldung: 08.10.1997
(73) Patentinhaber: INSTITUT STRAUMANN AG, 4437 Waldenburg (CH)
(72) Erfinder: HÜSKENS, Christoph, CH-8044 Zürich (CH); MUNDWILER, Ulrich, CH-4456 Tenniken (CH); GLATZMAIER, Jürgen, D-80637 München (DE); DIEDRICH, Peter, D-52057 Aachen (DE); SUTTER, Franz, CH-4435 Niederdorf (CH)
(74) Vertreter: Ullrich, Gerhard, Dr.
(86) Internationale Anmeldenummer: CH9500303
(87) Internationale Veröffentlichungsnummer: WO9619946

(56) Entgegenhaltungen:
- US-A- 4 988 292
- US-A- 5 082 442
- US-A- 5 232 364

## Beschreibung

### Anwendungsgebiet der Erfindung

Die Erfindung bezieht sich auf eine Befestigungsanordnung an einem im Kieferknochen gesetzten ein- oder mehrteiligen Dentalimplantat zur Fixierung kieferorthopädischer Apparaturen und nachfolgender Benutzung des Implantats als Träger für eine Zahnkrone oder eine andere Suprakonstruktion, wobei der Implantatkopf oder die aufgesetzte transmucosale Einheit aus dem Weichgewebe herausragt.

Kieferorthopädische Apparaturen bezwecken, angeborene bzw. später erworbene Zahnfehlstellungen zu korrigieren. Zum Verschieben der korrekturbedürftigen Zähne werden vielfach an Brackets befestigte, orthodontische Drahtbogen verwendet. Hierbei nutzt man die Torsions- und/oder Biegespannung eines solchen Drahtes als Krafteinwirkung auf die zu verschiebenden Zähne. Der Draht erstreckt sich zwischen einem möglichst stabil positionierten Fixpunkt und dem zu korrigierenden Zahn bzw. einer Gruppe von Zähnen. Der Fixpunkt kann entweder aus mehreren, zu einem Block zusammengefassten Zähnen oder aus einem gesetzten Implantat bestehen. Mit der zuletzt genannten Alternative befasst sich die hiesige Erfindung.

### Stand der Technik

An den zu verschiebenden Zähnen werden die Brackets entweder direkt auf den Zahnschmelz mittels eines geeigneten Spezialklebers aufgeklebt, oder man lötet die Brackets auf ein, nach einem Abdruck gefertigten, in sich geschlossenes Metallband, welches um den Zahn festzementiert wird. In diesem Bracket ist der orthodontische Draht einerseits befestigt, anderseits stützt sich der Draht an einem Implantat ab. Dieses Implantat könnte ein rein für die orthodontische Therapie konzipiertes Implantat sein, wie es in der internationale Patentanmeldung WO 96/12451 beschreiben ist. Ein derartiges Implantat besitzt eine aufschraubbare und in jeder Stellung fixierbare Klemmkappe mit einem peripheren Führungsschlitz zur Aufnahme des Drahtes. Nach erfolgter Zahnstellungskorrektur entfernt man dieses rein orthodontische Implantat wieder. Als Fixpunkt verwendet man jedoch auch Implantate mit einer Doppelfunktion, nämlich erstens zur Fixierung eines orthodontischen Drahtes und zweitens als Träger für eine Zahnkrone oder eine andere Suprakonstruktion. Um die Krafteinwirkung auf die zu verschiebenden Zähne forcierter zu gestalten, werden die Drahtbögen zumeist mit Zug- oder Druckfedern bzw. mit Gummizügen kombiniert.

Speziell bezieht sich die Erfindung auf eine Befestigungsanordnung zur Fixierung einer orthodontischen Apparatur an einem bifunktionalen Dentalimplantat. Bis dato wird auf das Implantat eine provisorische, individuelle oder vorgefertigte Krone aufgesetzt, wenn zunächst eine Zahnstellungskorrektur vorgesehen ist. An die vorläufige Krone wird ein Bracket zur Aufnahme des orthodontischen Drahtes befestigt (vgl. US-A-5 232 364). Diese Verfahrensweise hat mehrere Nachteile. Aufwendig ist zunächst, dass man überhaupt eine provisorische Krone einsetzen muss. Durch das Anbringen eines Bracket ist dessen späteres Abreissen wieder erforderlich, wobei jede Krone soweit in Mitleidenschaft gezogen wird, dass sie nicht mehr verwendungsfähig ist. Mit der Verwendung einer bestimmten provisorischen Krone ist man in der späteren Auswahl der Drahtformen eingeschränkt, denn in derartigen Kronen ist vielfach eine Drahtfuge bestimmter Kontur eingearbeitet. Wegen der Drahtfugen scheidet auch ein Beschleifen der provisorischen Krone aus. Zumeist wird der Zahnarzt auch das Bracket selbst auf die schon im Mund sitzende provisorische Krone aufkleben und nicht eine vom Zahntechniker bereits mit einem Bracket bestückte Krone einsetzen können. Folglich müssen Patient und Zahnarzt weitere Mühe aufbringen. Erheblichen Aufwand verursacht während der kieferorthopädischen Behandlung das nötige Nachjustieren an der im Mund des Patienten befindlichen Apparatur. Schliesslich muss die nach erfolgter Zahnstellungskorrektur durch das Abreissen des Bracket beschädigte provisorische Krone wieder gänzlich vom Implantat entfernt werden, um anschliessend die endgültige Krone bzw. die vorgesehene Suprastruktur auf das Implantat aufsetzen zu können. Diese Prozedur führt insgesamt zu beträchtlichen Kosten, und andere herkömmliche Apparaturen sind teils ebenso unbefriedigend, weil sie nicht korrosionssicher und nicht ausreichend stabil verankert sind oder auch, weil sie als deutliche Störung im Mund empfunden werden. Lediglich eine gewisse Verbesserung wurde mit der Anordnung gemäss US-A-4 988 292 erreicht. Die hier vorgeschlagene, auf das eingesetzte Dentalimplantat aufschraubbare Verankerungsbasis ist kompliziert im Aufbau, wenig flexibel in den Möglichkeiten der Positionierung und nur beschränkt zuverlässig.

### Aufgabe der Erfindung

Daher liegt der Erfindung das Problem zugrunde, eine praktikablere Befestigung für eine kieferorthopädische Apparatur an einem bifunktionalen Dentalimplantat zu schaffen. Hierbei geht es insbesondere darum, den Arbeits- und Materialaufwand zu senken, um somit die Kosten und die Strapazen für den Patienten zu reduzieren. Die zur Fixierung des orthodontischen Drahtes am Implantat zu konzipierende Befestigungsanordnung muss eine stabile Verankerung, ausreichende Korrosionsbeständigkeit und gute Biokompatibilität zur Minimierung der Gefahr von allergischen Reaktionen beim Patienten gewährleisten. Wünschenswert ist, dass die Befestigungseinrichtung eine sehr variable, jedoch einfach einstellbare Justierung erlaubt und ein Grossteil der Arbeitsvorgänge ausserhalb des Mundraumes des Patienten vom Zahntechniker vorbereitend ausgeführt werden kann.

### Wesen der Erfindung

Das Prinzip der Erfindung besteht darin, dass für ein in einen Kieferknochen primär als Träger für eine Zahnkrone oder eine andere Suprakonstruktion einsetzbares Dentalimplantat ein zahntechnisches Apparaturteil in Form einer auf dem Implantat fixierbaren Verankerungsbasis geschaffen wurde. Diese Verankerungsbasis wird während einer zuvor auszuführenden kieferorthopädischen Therapie benutzt, indem man an die Verankerungsbasis ein Bracket durch Kleben, Löten oder Schweissen anbringt, das seinerseits zur Befestigung von Apparaturteilen, wie orthodontischen Drähten oder Federn, dient. Bei der Verankerungsbasis ist eine für eine durchgehende Okklusalschraube vorgesehene Durchgangsbohrung exzentrisch angeordnet, so dass die Verankerungsbasis je nach dem vorhandenen Zwischenraum zwischen den benachbarten Zähnen und der orthodontisch günstigsten Position variabel ausgerichtet werden kann. Eine noch weiterreichende Variabilität in der Positionierung ergibt sich mit einer auch kopfstehend auf dem Implantat fixierbaren Verankerungsbasis.

Mit der erfindungsgemässen Befestigungseinrichtung werden eine Reihe von therapeutischen, zahntechnischen und finanziellen Vorteilen erzielt. Die bisherige Prozedur für den Patienten, den Zahnarzt und den Zahntechniker wird vereinfacht. Weitgehende Vorarbeiten bei der Anpassung und Bestückung einer Verankerungsbasis mit einem Bracket können durch den Zahntechniker ausserhalb des Mundes des Patienten unter Laborbedingungen erfolgen. Der negative Einfluss der Mundraumfeuchtigkeit auf die Qualität üblicher Klebverbindungen entfällt und bisherige Korrosionsprobleme an den Apparaturteilen werden wesentlich verringert. Unnötig wird die Verwendung einer einmalig benutzbaren und dann zerstörten Zahnkrone, als Aufbau auf das Implantat allein für die orthodontische Therapie. Eine benutzte Verankerungsbasis hingegen kann nach einer Verwendung gereinigt und erneut verwendet werden. Es ist möglich, die Verankerungsbasis vielfach zu beschleifen und somit anzupassen. Ein eventuell notwendiges Nachjustieren der Anordnung ist auf relativ einfache Weise realisierbar. Der Übergang von der orthodontischen Therapie zur Zweitnutzung des Implantats als Träger für eine Krone oder eine Suprakonstruktion hat sich durch die unkomplizierte Entfernbarkeit der Verankerungsbasis wesentlich vereinfacht. Schliesslich wird der zahnärztliche Arbeitsaufwand vermindert und im Resümee wirken sich alle Faktoren kostendämpfend aus.

### Zeichnungen und Ausführungsbeispiel

Anhand der beiliegenden Zeichnungen erfolgt nachstehend die detaillierte Beschreibung eines Ausführungsbeispiels der erfindungsgemässen Befestigungsanordnung, wobei abschliessend mögliche Modifikationen erwähnt werden. Es zeigen:
- Figur 1: einen Ober- oder Unterkieferausschnitt in Draufsicht mit der erfinderischen Befestigungsanordnung am Dentalimplantat und einer sich zu den Zähnen erstreckenden kieferorthopädischen Apparatur;
- Figur 2: den Teilschnitt gemäss Figur 1 entlang der Linie A-A (vergrössert);
- Figur 3: den Teilschnitt durch das im Kieferknochen eingeschraubte Implantat mit aufgeschraubter Verankerungsbasis gemäss Figur 1 entlang der Linie B-B (vergrössert);

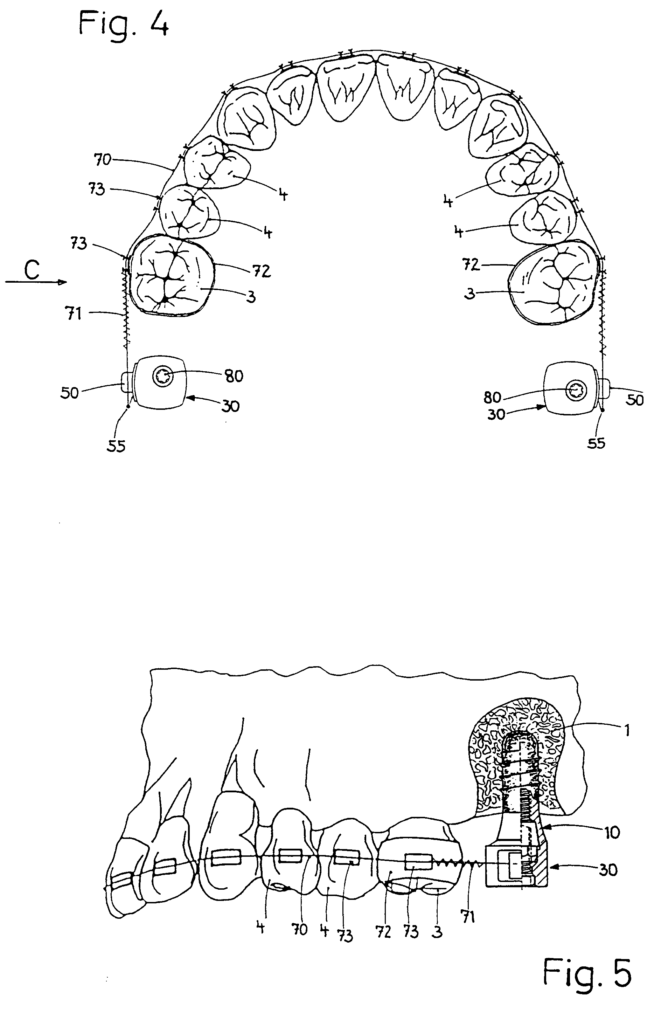

- Figur 4: einen Ober- oder Unterkiefer in Draufsicht mit beiderseits retromolar eingeschraubten Implantaten und einer daran befestigten orthodontischen Apparatur und
- Figur 5: einen Oberkieferausschnitt gemäss Figur 4 in der Ansichtsrichtung C.

Für die gesamte weitere Beschreibung gilt folgende Festlegung. Sind in einer Figur zum Zweck zeichnerischer Eindeutigkeit Bezugsziffern enthalten, aber im unmittelbar zugehörigen Beschreibungstext nicht erläutert, so wird auf deren Erwähnung in vorangehenden Figurenbeschreibungen Bezug genommen. Im Interesse der Übersichtlichkeit wird auf die wiederholte Bezeichnung von Bauteilen in nachfolgenden Figuren zumeist verzichtet, sofern zeichnerisch eindeutig erkennbar ist, dass es sich um "wiederkehrende" Bauteile handelt.

### Figuren 1 bis 3

In einen Kieferknochen **1** ist ein an sich herkömmliches Implantat **10** - in der Gestalt eines Primärteiles - eingesetzt, wobei die Implantatschulter **11** über dem den Kieferknochen **1** überdeckenden Weichgewebe **2** liegt. In das Implantat **10** ist eine konventionelle Verankerungsschraube **20** - in Gestalt eines Sekundärteils - eingeschraubt. Der Schraubenkopf **21** der Verankerungsschraube **20**, als 8-Kant ausgebildet, überragt die Implantatschulter **11**, während das Gewindeteil **22** der Verankerungsschraube **20** in eine axial angeordnete, sacklochförmige Gewindebohrung **12** im Implantat **10** eingreift. Die Verankerungsschraube **20** ihrerseits besitzt eine sich vom Schraubenkopf **21** axial in das Innere der Verankerungsschraube **20** erstreckende, ebenfalls sacklochförmige Gewindebohrung **23**. An den 8-Kant-Schraubenkopf **21** der Verankerungsschraube **20** schliesst sich ein im Durchmesser erweiterter und sich abwärts konisch verjüngender Schraubenkegel **25** an, so dass am Übergang vom 8-Kant-Schraubenkopf **21** zum Schraubenkegel **25** eine Ringschulter **24** gebildet wird. Vom Schraubenkegel **25** erstreckt sich weiter abwärts und verjüngt das Gewindeteil **22**.

Im zusammengeschraubten Zustand sitzt der Schraubenkegel **25** im Innenkonus **13** im Implantatkopf **14**. Die Ringschulter **24** ragt dabei - je nach Toleranzen - etwa bis in die Höhe der Oberkante der Implantatschulter **11**. Insoweit sind die genannten Funktionselemente an sich bekannt und beispielsweise im Fachbuch von Schroeder/Sutter/Buser/Krekeler: Orale Implantologie, 2. Aufl., Georg Thieme Verlag, Stuttgart - New York, 1994, Seiten 192 und 210, beschrieben sowie gezeigt.

Auf die Implantatschulter **11** aufgesetzt, ist eine im Prinzip quaderförmige, jedoch abgerundete Verankerungsbasis **30** - das Kernstück der Erfindung. Die vier an einer positionierten Verankerungsbasis **30** vertikal verlaufenden, konvexen Aussenflächen figurieren als Haftflächen **31** bis **34**. An einer der Haftflächen - im hiesigen Beispiel an der Haftfläche **31** - ist ein an sich standardgemässes Bracket **50** mittels einer dünnen Bonding-Schicht **60** aufgeklebt. Das Bracket **50** dient der Fixierung - wie beispielsweise hier gezeigt - von einem orthodontischen Draht **70**, der eine Feder **71** führt, wobei sich die Feder **71** und der Draht **70** bis zu dem zu verschiebenden Zahn **3** erstrecken. Dieser Zahn **3** ist gemäss dem Stand der Technik umfangsseitig mit einem Metallband **72** umschlungen, an welchem auch ein Bracket **73** durch Kleben oder Auflöten befestigt ist. Im Bracket **73** ist der Draht **70** gehaltert, der je nach Therapiekonzeption zu weiteren Zähnen **4** verläuft und dort ebenfalls in auf diesen Zähnen aufgebrachten Brackets **73** fixiert wird.

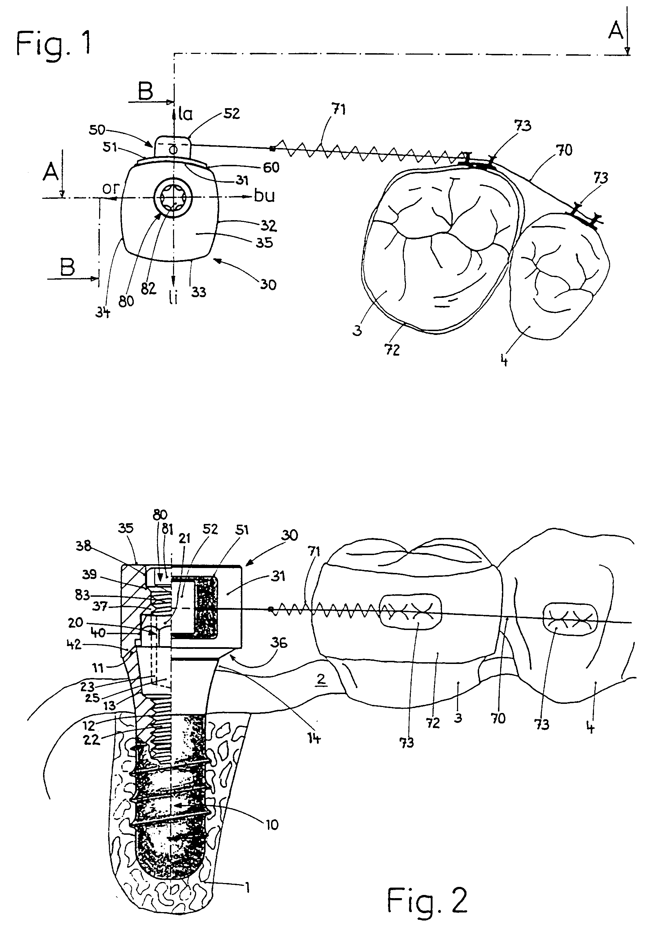

Mit Bezug auf Figur 1, als Draufsicht auf die Deckfläche **35** der Verankerungsbasis **30**, ergibt sich deren horizontale Querschnittsfläche in Form eines allseits konvex ausgebauchten Quadrats. Der Deckfläche **35** gegenüber liegt die Grundfläche **36**. Zur vereinfachten Verständigung wird die Verankerungsbasis **30** in ein theoretisches Fadenkreuz gelegt. Am Beispiel des Unterkiefers könnten das die Achsen labial-lingual (**la**-**li**) und bukkal-oral (**bu**-**or**) sein.

Im exzentrisch vorgesehenen Schnittpunkt dieser Achsen liegt die vertikal durch die Verankerungsbasis **30** hindurchgehende Bohrung **37** zur Aufnahme einer von oben eingesetzten, herkömmlichen Okklusalschraube **80**. Die Okklusalschraube **80** besitzt den Schraubenkopf **81** mit der oberseitig gelegenen, nichtrotationssymmetrischen Eingriffskontur **82** für den Eingriff eines entsprechenden Schraubwerkzeugs und den im Durchmesser reduzierten Gewindeschaft **83**.

Von der Deckfläche **35** beginnend, weist die Bohrung **37** zunächst eine Kopfpartie **38** und einen darunterliegenden, verengten Schraubensitz **39** auf. Der Schraubenkopf **81** ist in der Kopfpartie **38** versenkbar und stützt sich am Schraubensitz **39** ab. Unterhalb des Schraubensitzes **39** erweitert sich die Bohrung **37** wieder und ist als 24-Innenkant **40** ausgestaltet. Am unteren Auslauf des 24-Innenkants **40** ist eine radial umlaufende, erweiterte Nut **41** vorgesehen. Sollte sich die Ringschulter **24** an der Verankerungsschraube **20** durch Toleranzen in der Einschraubtiefe über die Implantatschulter **11** hinaus erheben, so dringt sie in den Freiraum der Nut **41** vor und wirkt sich nicht störend aus.

An die Nut **41** schliesst sich die an der Grundfläche **36** mündende Gegenschulter **42** an, welche sich als Kreisringfläche abwärts konisch erweitert und komplementär zur Implantatschulter **11** ausgebildet ist. Infolge der Exzentrizität der Bohrung **37** nähert sich die Gegenschulter **42** der Haftfläche **31**.

Mittels der Okklusalschraube **80** wird die Verankerungsbasis **30** fest auf das Inplantat **10** gedrückt; die Gegenschulter **42** sitzt praktisch fugenlos auf der Implantatschulter **11** auf. Der 8-Kant des Schraubenkopfs **21** steckt formschlüssig im 24-Innenkant **40** in der Verankerungsbasis **30**.

Durch die Formschlüssigkeit zwischen dem 8-Kant des Schraubenkopfs **21** und dem 24-Innenkant **40** ist es grundsätzlich möglich, die Verankerungsbasis **30** in 24 verschiedenen Drehstellungen, jeweils in 15°-Stufen auf dem Implantat **10** zu fixieren. Bei einer exzentrischen Anordnung der Bohrung **37** sind in der jeweils gewählten Winkelstellung vier verschiedene, um je 90° versetzte Varianten der Positionierung einstellbar. Dies bedeutet, dass z.B. nach labial vier verschiedene Abstände zwischen der Bohrung **37** und der betroffenen Haftfläche - momentan **31** - einstellbar sind. Ist der Abstand nach labial der entscheidende und wurde dieser durch Positionierung der entsprechenden Haftfläche **31** festgelegt, so ergeben sich die Abstände nach bukkal, lingual und oral von selbst. Würde man die Verankerungsbasis **30** µm 180° drehen, dann läge die Haftfläche **33** vorn, wodurch sich ein grösserer Abstand von der Bohrung **37** zu der nun frontseitigen Haftfläche **33** ergäbe. Die Abstände von der Bohrung **37** zu den Haftflächen **34**, **32** nach bukkal bzw. oral haben gewechselt. Damit hat man eine hohe Anpassungsfähigkeit der Befestigungsanordnung an die jeweilige dentale Situation und Aufgabe sowie an die Raumverhältnisse im Umfeld des gesetzten Implantats **10** erzielt. Ein optimaler Führungswinkel für den orthodontischen Draht **70** wird möglich.

Das Bracket **50** ist mit seiner Trägerplatte **51** auf die Haftfläche **31** aufgeklebt. Für die zuverlässige Haftung sorgt die zuvor aufgetragene, dünne Bonding-Schicht **60**. Das Herstellen der Klebeverbindung geschieht nach einer für den Fachmann konventionellen Methode. Als Bonding-Substanz kommen alle in jeder Hinsicht geeigneten Klebstoffe in Betracht, so beispielsweise Panavia® der Firma Cavex Holland B.V., ein Zement auf Komposit-Basis mit der erforderlichen chemischen und mechanischen Retention auch an Metallen bei ausreichender Haftfestigkeit.

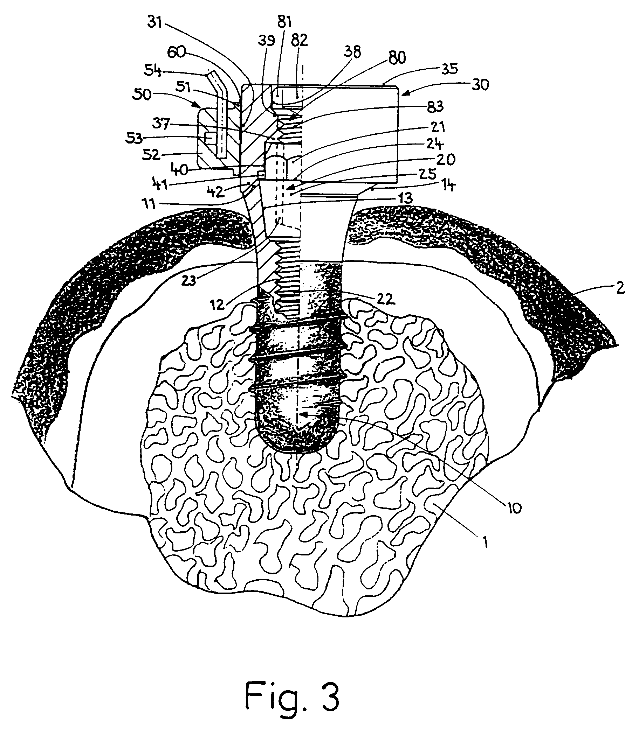

Auf dem Rücken der Trägerplatte **51** des Bracket **50** sind je nach Typ Klemmösen, Einhängebügel oder Riegel zur Fixierung des orthodontischen Drahtes **70** bzw. anderer kieferorthopädischer Mittel, wie Federn oder Gummizügen, vorgesehen. In Figur 3 ist beispielhaft ein Bracket **50** mit seiner Trägerplatte **51**, auf deren Rücken eine Klemmöse **52** mit einer Durchstecköffnung **53** und einem Riegel **54** vorgesehen ist, eingesetzt. Durch die Durchstecköffnung **53** wird der orthodontische Draht **70** gefädelt und mit einer Verdrehung des Riegels **54** verklemmt.

Als Implantatmaterial hat sich unlegiertes Titan aufgrund seiner ausgezeichneten Biokompatibilität bewährt. Für die direkt mit dem Implantat **10** zusammengefügte Verankerungsbasis **30** war ein Material auszuwählen, welches vom Implantatmaterial galvanisch nicht weit entfernt ist, um eine Spaltkorrosion zu vermeiden, die ein Bakterienwachstum und daraus resultierende Entzündungen nach sich ziehen könnte. Von Vorteil ist daher, die Verankerungsbasis **30** ebenfalls aus unlegiertem oder legiertem Titan zu fertigen. Die aufgesetzten Brackets **50** hingegen bestehen üblicherweise aus rostfreiem Stahl, der seinerseits eine ausreichende Festigkeit und Korrosionsbeständigkeit zeigt. Unter anderem verwendet man für die Brackets **50** auch Keramik oder Titan. Die beim Aufkleben der Trägerplatte **51** des Bracket **50** auf eine der Haftflächen **31** bis **34** der Verankerungsbasis **30** zwischengefügte Bonding-Schicht **60** wirkt als elektrische Isolationsschicht zwischen den im galvanischen Potential unterschiedlichen Materialien, so dass eine Korrosion an den Materialübergängen ausgeschlossen, zumindest jedoch - bei mikroskopisch unvollständiger Bonding-Schicht **60** -vertretbar gering ist.

Als vorteilhaft für die Haftfestigkeit der Klebeverbindung hat sich erwiesen, den Haftflächen **31** bis **34** eine Oberflächenrauhigkeit im Bereich der Rauhigkeitsklasse N10 bis N12 mit einem Mittenrauhwert von Rₐ von 12,5 µm bis 50,0 µm zu verleihen. Eine besonders gute Adhäsion der Bonding-Substanz erreicht man durch Silanisieren der Haftflächen **31** bis **34** der Verankerungsbasis **30** und der Haftflächen an den Trägerplatten **51** der Brackets **50**.

### Figuren 4 und 5

Veranschaulicht ist ein Beispiel einer kieferorthopädischen Apparatur zur Zahnstellungskorrektur unter Verwendung der erfindungsgemässen Befestigungseinrichtung. Mit der Apparatur werden kontinuierlich wirkende Kräfte auf die zu verschiebenden Zähne **3,4** ausgeübt. Als stabiles Verankerungselement nutzt man ein in den Unter- bzw. Oberkiefer nach herkömmlicher Methode eingesetztes Implantat **10**, hier beiderseits. Während der Einheilzeit ist der Implantatkopf **14** verschlossen.

Nach der Einheilzeit wird der Verschluss entfernt und eine Verankerungsschraube **20** eingedreht und anschliessend die eventuell bereits zuvor ausserhalb des Mundraums mit einem aufgeklebten Bracket **50** versehene Verankerungsbasis **30** aufgesetzt und entsprechend den Gegebenheiten ausgerichtet. Sodann erfolgt die Fixierung der Verankerungsbasis **30** auf dem Implantat **10** mittels einer Okklusalschraube **80**. Erforderlichenfalls wird ein vorgefertigtes Metallband **72** mit einem aufgesetzten Bracket **73** praktisch radial um den benachbarten Molaren **3** gelegt und weitere Zähne **4** nach mesial werden mit Brackets **73** versehen. Schliesslich führt man den orthodontischen Draht **70** in die Brackets **50**, **73** ein, der mit weiteren Apparaturteilen - hier Federn **71** - bestückt sein kann und fixiert den Draht **70** in den endpositionierten Brackets **50** an den dafür vorgesehenen Teilen, beispielsweise einem Einhängebügel **55**. Der orthodontische Draht **70** spannt sich von einer Verankerungsbasis **30**, die auf einem endpositionierten Implantat **10** aufgesetzt ist, um eine gesamte Zahnreihe hin zu einer zweiten ebensolchen Verankerungsbasis **30.**

Ausdrücklich erwähnt seien folgende Abwandlungsmöglichkeiten der bisher beschriebenen Befestigungsanordnung:
- Anstelle auf ein einteiliges Implantat **10**, dessen Kopf **14** aus dem Weichgewebe **2** herausragt, kann die Verankerungsbasis **30** auch auf eine transmucosale Einheit eines mehrteiligen Implantats aufgesetzt werden.
- Die Verankerungsbasis **30** wird in verschiedenen Grössen, insbesondere Höhen erstellt.
- Als horizontale Querschnittsform käme auch eine im Prinzip rechteckige oder dreieckige Verankerungsbasis **30** mit ausgebauchten, konvexen Haftflächen **31** bis **34** und abgerundeten Ecken in Betracht. An einer solchen Verankerungsbasis **30** könnte man vier bzw. drei verschiedene Oberflächenkrümmungen zur passfähigen Aufnahme jeweiliger Brackets **50** vorsehen. Denkbar sind auch ovale oder kreisrunde Formen, wo es keine gegenseitig abgegrenzten Haftflächen mehr gibt.
- Die Kantenzahl am Schraubenkopf **21** der Verankerungsschraube **20** sowie am Innenkant **40** in der Verankerungsbasis **30** ist variabel wählbar, soweit eine sinnvolle Funktion erzielt wird. Die fixierbaren Drehstellungen zwischen Implantat **10** und Verankerungsbasis **30** könnten auch dadurch ermöglicht werden, dass ein aus der Verankerungsbasis **30** herausragender Vielkant in einen Innenvielkant im Implantat **10** eingreift.
- Die Bonding-Schicht **60** kann neben der bevorzugten Klebverbindung auch eine Löt- oder Schweissverbindung darstellen.
- Sieht man an einer Verankerungsbasis **30** nur eine Haftfläche vor, kann es von Vorteil sein, an dieser Haftfläche, nahe der Grundfläche **36**, einen erhaben hervorstehenden Materialsteg anzuordnen. Dieser Materialsteg ist dadurch herstellbar, dass von der Haftfläche Material bis auf die Höhe der Oberkante des Materialstegs quasi abgetragen wird. Ein auf dieser Haftfläche fixiertes Bracket **50** steht weniger hervor und stört damit im Mundraum weniger.
- Die Gegenschulter **42** an der Verankerungsbasis **30** muss nicht die zuvor beschriebene konische Form besitzen.

Die Form der Gegenschulter **42** ist von der Form der Implantatschulter **11** abhängig.
- Gestaltet man an der Deckfläche **35** sowie an der Grundfläche **36** jeweils eine Gegenschulter **42** und ist sowohl oberhalb als auch unterhalb eines zweiseitig benutzbaren Schraubensitzes **39** ein Innenvielkant **40** vorgesehen, so kann die Verankerungsbasis **30** auch kopfstehend auf das Implantat **10** aufgeschraubt werden. Bei exzentrisch angeordneter Bohrung **37** ergeben sich dann vier weitere Möglichkeiten der Positionierung der Verankerungsbasis **30**, d.h. in der Verteilung der unterschiedlichen Abstände von der Bohrung **37** zu der jeweiligen Haftfläche **31** bis **34**.
- Nicht zwingend ist der Vielfachinnenkant **40** in der Verankerungsbasis **30**. Bei Verwendung einer Verankerungsschraube **20** mit zylindrischem oder konischem Schraubenkopf **21** muss die Rotationssicherung der Verankerungsbasis entweder allein durch die Verschraubung mit der Okklusalschraube **80** und die somit bewirkte Flächenpressung oder auch durch zusätzliche Mittel erfolgen.
- Bei besonderen ästhetischen Anforderungen, vorrangig im labialen Bereich, könnte das Implantat enossal tiefer gesetzt werden und somit die untere Partie der Verankerungsbasis **30** zumindest ansatzweise von der Gingiva umschlossen sein.

## Patentansprüche

1. Befestigungsanordnung an einem Dentalimplantat zur Fixierung kieferorthopädischer Apparaturteile und nachfolgender Benutzung des im Kieferknochen (**1**) eingesetzten ein- oder mehrteiligen Implantats (**10**) mit einer Implantatschulter (**11**) als Träger für eine Zahnkrone oder eine andere Suprakonstruktion, wobei
a) der Implantatkopf (**14**) oder die aufgesetzte transmucosale Einheit zumindest annähernd aus dem Weichgewebe (**2**) herausragt;
b) am Bracket (**50**) zumindest ein Apparaturteil (**70,71**) fixierbar ist;
c) die Verankerungsbasis (**30**) eine vertikal durchgängig angeordnete Bohrung (**37**) aufweist;
d) mittels einer Okklusalschraube (**80**), welche durch die Bohrung (**37**) geführt wird und die direkt oder indirekt in das Implantat (**10**) eingreift, die Verankerungsbasis (**30**) auf dem Implantat (**10**) fixierbar ist; und
e) direkt oder indirekt am Implantat (**10**) und an der Verankerungsbasis (**30**) wechselseitig ein maskulin bzw. feminin ausgebildeter Vielkant (**21,40**) vorhanden ist, die formschlüssig miteinander in Eingriff stehen, so dass man die Verankerungsbasis (**30**) in verschiedenen, stabilen Drehpositionen auf das Implantat (**10**) aufstecken kann,
**dadurch gekennzeichnet**, dass
f) eine auf die Implantatschulter (**11**) des Implantats (**10**) aufsetzbare Verankerungsbasis (**30**) mit mindestens einer Haftfläche (**31-34**) vorgesehen ist;
g) diese Haftfläche (**31-34**) zur Befestigung der Trägerplatte (**51**) eines Bracket (**50**) dient; und
h) die Bohrung (**37**) exzentrisch angeordnet ist, wodurch sich von der Bohrung (**37**) zu den Haftflächen (**31-34**) in einer Abstufung jeweils unterschiedliche Abstände ergeben.

2. Befestigungsanordnung nach Anspruch 1, **dadurch gekennzeichnet**, dass
a) eine in den Implantatkopf (**14**) einschraubbare Verankerungsschraube (**20**) vorgesehen ist;
b) der Schraubenkopf (**21**) der eingeschraubten Verankerungsschraube (**20**) aus dem Implantatkopf (**14**) herausragt und äusserlich als Vielkant ausgebildet ist;
c) vom Schraubenkopf (**21**) sich in die Verankerungsschraube (**20**) eine Gewindebohrung (**23**) erstreckt;
d) die Bohrung (**37**) in der Verankerungsbasis (**30**) zumindest einen Abschnitt mit einem Vielfach-Innenkant (**40**) aufweist;
e) der Vielkant am Schraubenkopf (**21**) formschlüssig in den Vielfach-Innenkant (**40**) eingreift und
f) im montierten Zustand die Okklusalschraube (**80**) sich mit ihrem Schraubenkopf (**81**) an einem in der Bohrung (**37**) gelegenen Schraubensitz (**39**) abstützt, während ihr Gewindeschaft (**83**) in die Gewindebohrung (**23**) der Verankerungsschraube (**20**) eingreift.

3. Befestigungsanordnung nach Anspruch 2, **dadurch gekennzeichnet**, dass
a) der Schraubensitz (**39**) sowohl für eine von der Deckfläche (**35**) als auch von der Grundfläche (**36**) in die Bohrung (**37**) eingeführte Okklusalschraube (**80**) nutzbar ist;
b) innerhalb der Bohrung (**37**) beiderseits, an den Schraubensitz (**39**) angrenzend, je ein Abschnitt mit einem Vielfach-Innenkant (**40**) vorgesehen ist und
c) entweder der Schraubenkopf (**81**) im Abschnitt des jeweils nicht als Komplement zum Aussenvielkant des Schraubenkopfs (**21**) genutzten Vielfach-Innenkants (**40**) Platz findet oder sich zur Aufnahme des Schraubenkopfs (**81**) an die Abschnitte der Vielfach-Innenkante (**40**) jeweils eine Kopfpartie (**38**) anschliesst und äusserlich die Bohrung (**37**) jeweils mit einer zur Implantatschulter (**11**) komplementären Gegenschulter (**42**) mündet.

4. Befestigungsanordnung nach Anspruch 3, **dadurch gekennzeichnet**, dass der Schraubenkopf (**21**) als 8-Kant und der Innenkant (**40**) als 24-Kant ausgebildet sind, so dass eine Drehpositionierung der Verankerungsbasis (**30**) in 15°-Stufen möglich ist.

5. Befestigungsanordnung nach Anspruch 3, **dadurch gekennzeichnet**, dass sich die Gegenschulter (**42**) komplementär zur Implantatschulter (**11**) nach aussen konisch öffnet.

6. Befestigungsanordnung nach Anspruch 1, **dadurch gekennzeichnet**, dass
a) die Verankerungsbasis (**30**) im Prinzip die Form eines Quaders besitzt, dessen vier vertikale Seitenflächen die Haftflächen (**31-34**) bilden und nach aussen konvex gewölbt sind, wobei
b) die Haftflächen (**31-34**) zumindest paarweise unterschiedliche Krümmungsradien aufweisen können.

7. Befestigungsanordnung nach Anspruch 1, **dadurch gekennzeichnet**, dass
a) das Implantat (**10**) sowie die Verankerungsbasis (**30**) aus legiertem oder unlegiertem Titan bestehen;
b) die auf der Verankerungsbasis aufzubringenden Brackets (**50**) aus rostfreiem Stahl, Keramik, Titan oder einem anderen, geeigneten Material bestehen;
c) die an der Verankerungsbasis (**30**) vorgesehenen Haftflächen (**31-34**) eine Oberflächenrauhigkeit im Bereich der Rauhigkeitsklasse N10 bis N12 mit einem Mittenrauhwert im Bereich 12,5 µm < Rₐ < 50,0 µm aufweisen und
d) zumindest die Haftflächen (**31-34**) an der Verankerungsbasis (**30**) sowie die Haftfläche an der Trägerplatte (**51**) silanisiert sind.

8. Befestigungsanordnung nach Anspruch 1, **dadurch gekennzeichnet**, dass die Trägerplatte (**51**) des Bracket (**50**) auf der Haftfläche (**31-34**) mittels einer aufgetragenen, bzw. gebildeten Bonding-Schicht (**60**) befestigt ist, wobei die Bonding-Schicht (**60**) eine Kleb-, Löt- oder Schweissverbindung darstellt.

## Claims

1. Fastening device on a dental implant for the fixing of orthodontic apparatus components and the subsequent use of the single-part or multi-part implant (**10**), fitted in the jaw bone (**1**) and having an implant shoulder (**11**), as a support for a crown or another superstructure, in which
a) the implant head (**14**) or the attached transmucosal unit protruding at least to some extent from the soft tissue (**2**);
b) at least one apparatus component (**70,71**) can be fixed on the bracket (**50**);
c) the anchoring base (**30**) has a vertically continuous bore (**37**);
d) the anchoring base (**30**) can be fixed on the implant (**10**) by means of an occlusal screw (**80**) which is guided through the bore (**37**) and which engages directly or in-directly into the implant (**10**); and
e) polygons (**21,40**) of male and female configuration, respectively, are alternatingly present, directly or indirectly, on the implant (**10**) and on the anchoring base (30) and engage with one another with positive locking, so that the anchoring base (**30**) can be placed on the implant (**10**) in various stable positions of rotation,
characterized in that
f) an anchoring base (**30**) which can be fitted on the implant shoulder (**11**) of the implant (**10**) is provided with at least one adhesion surface (**31-34**);
g) this adhesion surface (**31-34**) serves for fastening of a support plate (**51**) of a bracket (**50**); and
h) the bore (**37**) is eccentrically provided in such a way that different distances from the bore (**37**) to the adhesion surfaces (**31-34**) are obtained in a gradation.

2. Fastening device according to Claim 1, characterized in that
a) an anchoring screw (**20**) is provided which can be screwed into the implant head (**14**), and
b) the screw head (**21**) of the screwed-in anchoring screw (**20**) protrudes from the implant head (**14**) and is designed as a polygon, and
c) a threaded bore (**23**) extends from the screw head (**21**) into the anchoring screw (**20**), and
d) the bore (**37**) in the anchoring base (**30**) has at least one section with an internal polygon (**40**), and
e) the polygon on the screw head (**21**) engages with positive locking in the internal polygon (**40**), and
f) in the assembled state, the occlusal screw (**80**) rests with its screw head (**81**) on a screw seat (**39**) located in the bore (**37**), while its threaded shank (**83**) engages in the threaded bore (**23**) of the anchoring screw (**20**).

3. Fastening device according to Claim 2, characterized in that
a) the screw seat (**39**) can be used both for an occlusal screw (**80**) which has been introduced into the bore (**37**) from the top surface (**35**) and also for an occlusal screw (**80**) which has been introduced into the bore (**37**) from the bottom surface (**36**), and
b) within the bore (**37**), on both sides, and adjoining the screw seat (**39**), there is in each case a section with an internal polygon (**40**), and
c) either the screw head (**81**) finds room in that section of the internal polygon (**40**) which is not used to complement the outer polygon of the screw head (**21**), or a head portion (**38**) in each case adjoins the sections of the internal polygon (**40**) for the purpose of receiving the screw head (**81**), and on the outside the bore (**37**) opens out in each case with a counter-shoulder (**42**) which complements the implant shoulder (**11**).

4. Fastening device according to Claim 3, characterized in that the screw head (**21**) is designed as an octagon and the inner edge (**40**) as an icositetrahedron, so that a rotational positioning of the anchoring base (**30**) is possible in 15° stages.

5. Fastening device according to Claim 3, characterized in that the counter-shoulder (**42**) opens outwardly conical complementary to the implant shoulder (**11**).

6. Fastening device according to Claim 1, characterized in that
a) the anchoring base (**30**) has in principle the shape of a parallelepiped whose four vertical side surfaces form the adhesion surfaces (**31-34**) which bulge convexly outwards, and
b) the adhesion surfaces (**31-34**) can have different radii of curvature, at least in pairs.

7. Fastening device according to Claim 1, characterized in that
a) the implant (**10**) and the anchoring base (**30**) are made of alloyed or unalloyed titanium, and
b) the brackets (**50**) which are to be applied on the anchoring base are made of stainless steel, ceramic, titanium or another suitable material, and
c) the adhesion surfaces (**31-34**) provided on the anchoring base (**30**) have a surface roughness in the region of roughness grades N10 to N12, with a mean roughness value in the range 12.5 µm < Rₐ < 50.0 µm, and
d) at least the adhesion surfaces (**31-34**) on the anchoring base (**30**) and the adhesion surface on the support plate (**51**) are silanized.

8. Fastening device according to Claim 1, characterized in that the support plate (**51**) of the bracket (**50**) is fixed on the adhesion surface (**31-34**) by means of an applied or formed bonding layer (**60**) and the bonding layer (**60**) represents an adhesive, soldering or welding connection.

## Revendications

1. Dispositif de fixation sur un implant dentaire pour la fixation de parties d'appareillage orthodontiques et l'utilisation ultérieure de l'implant (10) formé d'une ou de plusieurs parties, inséré dans l'os de la mâchoire (1) et comportant un épaulement (11) formant support pour une couronne dentaire ou une autre structure extérieure, dans lequel
a) la tête (14) de l'implant ou l'unité rapportée, traversant la muqueuse, ressort au moins approximativement hors de la gencive (2) ;
b) au moins une partie d'appareillage (70, 71) peut être fixée sur une partie en console (50);
c) une base d'ancrage (30) possède un perçage traversant vertical (37) ;
d) la base d'ancrage (30) peut être fixée sur l'implant (10) au moyen d'une vis d'occlusion (80), qui est guidée dans le perçage (37) et s'engage directement ou indirectement dans l'implant (10) ; et
e) un bloc à profil polygonal mâle (21) et un bloc à profil polygonal femelle (40) sont disposés, d'une manière alternée, directement ou indirectement sur l'implant (10) et sur la base d'ancrage (30), ces blocs à profil polygonal engrenant entre eux selon une liaison par formes complémentaires de sorte qu'on peut emmancher la base d'ancrage (30) sur l'implant (10), et ce dans différentes positions de rotation stables,
caractérisé en ce que
f) la base d'ancrage (30), qui peut être emmanchée sur l'épaulement (11) de l'implant (10), est pourvue d'au moins une surface d'adhérence (31-34) ;
g) cette surface d'adhérence (31-34) sert à fixer la plaque de support (51) de la partie en console (50) ; et
h) le perçage (37) est disposé de façon excentrée, ce qui permet d'obtenir des distances respectives différentes, avec un échelonnement, entre le perçage (37) et les surfaces d'adhérence (31-34).

2. Dispositif de fixation selon la revendication 1, caractérisé en ce que
a) il est prévu une vis d'ancrage (20) pouvant être vissée dans la tête (14) de l'implant,
b) la tête (21) de la vis d'ancrage vissée (20) ressort de la tête (14) de l'implant et est agencée extérieurement avec un profil polygonal,
c) un perçage taraudé (23) s'étend à partir de la tête (21) de la vis dans la vis d'ancrage (20) ;
d) le perçage (37) situé dans la base d'ancrage (30) possède au moins un tronçon ayant un profil intérieur polygonal (40) ;
e) le profil polygonal présent sur la tête (21) de la vis s'engage selon une liaison par formes complémentaires dans le profil polygonal intérieur (40), et
f) à l'état monté la vis d'occlusion (80) prend appui par sa tête (81) contre un épaulement (39) d'appui pour la vis situé dans le perçage (37), tandis que sa tige filetée (83) s'engage dans le perçage taraudé (23) de la vis d'ancrage (20).

3. Dispositif de fixation selon la revendication 2, caractérisé en ce que
a) l'épaulement (39) d'appui pour la vis peut être utilisé aussi bien pour une vis d'occlusion (80) qui est introduite à partir de la surface de recouvrement (35) que pour une vis d'occlusion (80) introduite à partir de la surface de base (36) dans le perçage (37) ;
b) un tronçon respectif à profil polygonal intérieur (40) est prévu des deux côtés, à l'intérieur du perçage (37), dans une position contiguë à l'épaulement (39) d'appui pour la vis, et
c) la tête (81) de la vis est introduite dans le tronçon du bloc à profil polygonal intérieur respectif (40), qui n'est pas utilisée en tant que complément du bloc à profil polygonal extérieur de la tête (21) de la vis ou qu'une partie respective (38) de la tête se raccorde, pour loger la tête (81) de la vis, aux tronçons des blocs (40) à profil polygonal intérieur, et le perçage (37) débouche respectivement à l'extérieur par un épaulement antagoniste (42) complémentaire de l'épaulement (11) de l'implant.

4. Dispositif de fixation selon la revendication 3, caractérisé en ce que la tête (21) de la vis est agencée sous la forme d'un bloc polygonal à 8 pans et que le bloc à profil polygonal intérieur (40) est agencé sous la forme d'un bloc à 24 pans, de sorte qu'un positionnement en rotation de la base d'ancrage (30) selon des échelons de 15° est possible.

5. Dispositif de fixation selon la revendication 3, caractérisé en ce que l'épaulement antagoniste (42), qui est complémentaire de l'épaulement (11) de l'implant, s'ouvre avec une forme conique vers l'extérieur.

6. Dispositif de fixation selon la revendication 1, caractérisé en ce que
a) la base d'ancrage (30) possède en principe la forme d'un parallélépipède, dont les quatre faces latérales verticales forment les surfaces d'adhérence (31-34) et sont cintrées avec une forme convexe en direction de l'extérieur,
b) les surfaces d'adhérence (31-34) peuvent posséder des rayons de courbure qui sont différents au moins par couples.

7. Dispositif de fixation selon la revendication 5, caractérisé en ce que
a) l'implant (10) ainsi que la base d'ancrage (30) sont réalisés en titane allié ou non allié ;
b) les parties en console (50), qui doivent être montées sur la base d'ancrage, sont formées d'acier inoxydable, de céramique, de titane ou d'un autre matériau approprié ;
c) les surfaces d'adhérence (31-34), qui sont prévues sur la base d'ancrage (30), possèdent une rugosité de surface dans la gamme de la classe de rugosité N10 à N12 avec une valeur de rugosité moyenne dans la gamme de 12,5 µm < Rₐ < 50,0 µm, et
d) au moins les surfaces d'adhérence (31-34) sur la base d'ancrage (30) ainsi que la surface d'adhérence sur la plaque de support (51) sont recouvertes de silane.

8. Dispositif de fixation selon la revendication 1, caractérisé en ce que la plaque de support (51) de la partie en console (50) est fixée à la surface d'adhérence (31-34) à l'aide d'une couche de liaison déposée ou formée (60), la couche de liaison (60) représentant une liaison collée, une liaison brasée ou une liaison soudée.
